# EUROPEAN PATENT APPLICATION

(11) **EP 3 232 117 A1**
(43) Date of publication of application: **18.10.2017**
(21) Application number: 14907972.5
(22) Date of filing: 11.12.2014
(51) Int. Cl.: F21S 8/10, B62J 6/00, B62J 6/04

(54) **AUTOMATIC TWO-WHEELED VEHICLE TAIL LIGHT DEVICE**

(71) Applicant: Honda Motor Co., Ltd., Tokyo 107-8556 (JP)
(72) Inventor: BOONSUK, Ekkawit, Bangkok 10520 (TH)
(74) Representative: Beder, Jens
(86) International application number: PCT/JP2014/082896
(87) International publication number: WO 2016/092682

(57) **Abstract**

It is intended to provide a tail light device for a motorcycle, which can prevent recognition of leaked light by changing a ray of light to be incident into a clear lens disposed in a position visible in outer appearance into a ray of light with a desired color before incidence into the clear lens. The tail light device for a motorcycle includes a tail light unit (Y1) and a winker unit (Y2). The tail light unit (Y1) is provided on a rear part of a vehicle and includes a red lens (1) and a tail light bulb (B1). The winker unit (Y2) is provided on a right upper part and a left upper part of the tail light unit (Y1) and includes a clear lens (2) and right and left winker bulbs (B2). The tail light device includes a coupling part (P) coupling a lower part of the clear lens (2) and an upper part of the tail light unit (Y1), wherein the clear lens (2) includes an inwardly inserted part (2a) inserted inside the red lens (1) in the coupling part (P), and the red lens (1) includes a light shade part (4) shading incidence of a direct light from the tail light bulb (B1) into the inwardly inserted part (2a).

## Description

### FIELD

The present invention relates to a tail light device for a motorcycle, which includes a tail light unit and a winker unit. The tail light unit is disposed on a rear part of the vehicle and includes a red lens and a tail light bulb, whereas a winker unit is disposed on a right upper part and a left upper part of the tail light unit and includes a clear lens and right and left winker bulbs.

### BACKGROUND

As disclosed in Patent Literature 1, for instance, a tail light device including a rib (15) has been proposed as a conventional tail light device for a motorcycle. The rib (15) is disposed outside a tail light lens in order to shade light penetrating through a (clear) license light lens. According to the conventional art, the rib (15) can prevent light leakage of a license light on the lower side of the tail light unit.

### CITATION LIST

### PATENT LITERATURE

Patent Literature 1: Japanese Patent No. 4420836

### BRIEF SUMMARY

### TECHNICAL PROBLEM

However, the conventional structure described above is a structure for preventing light leakage of the license light, and blocks traveling of light in a position on the lower side of the tail light unit, that is, a position less visible in outer appearance. In other words, the conventional structure does not adjust a direction of light such as light emitted by a tail light in a position visible in outer appearance. Therefore, when it is intended to adjust light emission in a position less visible in outer appearance, such as light emission by a tail light, with the rib of the conventional art described above, the rib is inevitably disposed in a position visible in outer appearance. This possibly results in drawbacks such as degradation in aesthetic appearance and increase in size of the light unit.

The present invention has been made in view of the circumstances described above. It is an object of the present invention to provide a tail light device for a motorcycle, which can prevent recognition of leaked light by changing a ray of light to be incident into a clear lens disposed in a possible visible in outer appearance into a ray of light with a desired color before incidence into the clear lens.

### SOLUTION TO PROBLEM

The invention recited in claim 1 relates to a tail light device for a motorcycle including a tail light unit and a winker unit. The tail light unit is provided on a rear part of a vehicle, and includes a red lens and a tail light bulb. The winker unit is provided on a right upper part and a left upper part of the tail light unit, and includes a clear lens and right and left winker bulbs. The tail light device is characterized by including a coupling part coupling a lower part of the clear lens and an upper part of the tail light unit, wherein the clear lens includes an inwardly inserted part inserted inside the red lens in the coupling part, and the red lens includes a light shade part shading incidence of a direct light from the tail light bulb into the inwardly inserted part.

The invention described in claim 2 relates to the tail light device for a motorcycle recited in claim 1, and the tail light device is characterized in that the inwardly inserted part of the clear lens is formed in an upper half of the tail light unit, and the inwardly inserted part other than a range shaded by the light shade part is shaded by a reflector wall against the direct light from the tail light bulb.

The invention described in claim 3 relates to the tail light device for a motorcycle recited in claim 2, and the tail light device is characterized in that the reflector wall includes a cutout in the range shaded by the light shade part.

The invention described in claim 4 relates to the tail light device for a motorcycle recited in claim 1, and the tail light device is characterized in that the light shade part is made in a form of a rib protruding from an inner peripheral surface of the red lens toward a position above the tail light bulb.

The invention described in claim 5 relates to the tail light device for a motorcycle recited in claim 1, and the tail light device is characterized in that the clear lens includes a hook part formed by bending a lower end of the inwardly inserted part to back of the vehicle, and an upper part of the red lens is coupled to and held by the hook part.

The invention described in claim 6 relates to the tail light device for a motorcycle recited in claim 5, and the tail light device is characterized by further including a lamp case to which the tail light unit and the winker unit are attached, wherein the lamp case includes a recess on an upper part thereof so as to be capable of holding the clear lens while a protruding part formed on a middle of an upper end of the clear lens is contacted in abutment to the recess.

The invention described in claim 7 relates to the tail light device for a motorcycle recited in claim 6, and the tail light device is characterized in that the clear lens includes joint parts having a pin shape on both sides thereof, and the joint parts are fitted to groove parts formed on the lamp case whereby the clear lens is capable of being assembled to the lamp case while in place.

The invention described in claim 8 relates to the tail light device for a motorcycle recited in claim 6, and the tail light device is characterized in that the red lens includes a window part with transparency in a lower part thereof so as to make a license plate of the vehicle face the window part, and the lamp case includes a protruding part extended to a vicinity of an edge of the window part.

The invention described in claim 9 relates to the tail light device for a motorcycle recited in claim 1, and the tail light device is characterized in that the red lens includes a reflection part capable of reflecting an external light in a lower part thereof and includes a step part capable of diffusely reflecting the light from the tail light bulb.

### ADVANTAGEOUS EFFECTS

According to the invention of claim 1, the clear lens for the right and left winkers is coupled to the upper part of the tail light unit. Hence, it is possible to provide a characteristic design. Additionally, the clear lens is inwardly inserted in the coupling part that the clear lens and the red lens are joined in the up-and-down direction. Hence, good appearance is obtained in a rear view. In other words, when the red lens is inserted inside, the inward insertion of the red lens is visible through the clear lens disposed above, and this deteriorates appearance. By contrast, when the clear lens is inserted inside as with the present invention, appearance can be made good.

Moreover, the red lens includes the light shade part, and light, penetrating through the light shade part before incidence into the clear lens, changes white light from the tail light bulb into red light. Hence, even in the construction that the clear lens is inserted inside, the light to be incident into the clear lens from the tail light bulb does not appear like white leaked light. Therefore, recognition of leaked light can be prevented by changing a ray of light to be incident into the clear lens disposed in a position visible in outer appearance into a ray of light with a desired color before incidence into the clear lens

According to the invention of claim 2, the inwardly inserted part of the clear lens is formed in the upper half of the tail light unit, and the inwardly inserted part, other than the range shaded by the light shade part, is shaded by the reflector wall against the direct light from the tail light bulb. Hence, the light shade part can be set to have a minimally required width dimension.

According to the invention of claim 3, the reflector wall includes the cutout in the range shaded by the light shade part. Hence, the height dimension of the tail light device for a motorcycle can be reduced in comparison with when the reflector wall is provided even in the range shaded by the light shade part.

According to the invention of claim 4, the light shade part is made in the form of the rib protruding from the inner peripheral surface of the red lens toward the position above the tail light bulb. Hence, with a possibly simplest construction, the color of a ray of light can be changed into a desired color, and recognition of leaked light can be prevented.

According to the invention of claim 5, the clear lens includes the hook part formed by bending the lower end of the inwardly inserted part to back of the vehicle, and the upper part of the red lens is coupled to and held by the hook part. Hence, the clear lens and the red lens can be more reliably and easily coupled to each other.

According to the invention of claim 6, the tail light device includes a lamp case to which the tail light unit and the winker unit are attached. Additionally, the lamp case includes the recess on the upper part thereof so as to be capable of holding the clear lens while the protruding part, formed on the middle of the upper end of the clear lens, is contacted in abutment to the recess. Hence, a cooperative holding force can be produced by holding of the upper part of the red lens by the hook part of the clear lens and abutment contact of the protruding part of the clear lens to the recess of the lamp case, and the clear lens can be held easily and reliably.

According to the invention of claim 7, the pin-shaped joint parts are formed on the both sides of the clear lens, and are fitted to the groove parts formed on the lamp case, whereby the clear lens can be assembled to the lamp case while in place. Hence, the clear lens can be easily assembled to the lamp case without using any fastening member such as a screw.

According to the invention of claim 8, the red lens includes the window part with transparency in the lower part thereof so as to make the license plate of the vehicle face the window part, and the lamp case includes the protruding part extended to the vicinity of the edge of the window part. Hence, it is possible to prevent leakage of the light from the tail light bulb at an unwanted position in a lower part of the lamp case and reliably irradiate the light on the license plate.

According to the invention of claim 9, the red lens includes the reflection part capable of reflecting the external light in the lower part thereof and includes the step part capable of diffusely reflecting the light from the tail light bulb. Hence, the external light can be reflected by the reflection part without blocking penetration of the light from the tail light bulb, and simultaneously, diffuse reflection by the step part can enhance aesthetic appearance in transmitting the light from the tail light bulb to the outside.

### BRIEF DESCRIPTION OF DRAWINGS

FIG. 1 is a side view of a rear part of a vehicle to which a tail light device for a motorcycle according to the present invention is applied.
FIG. 2 is a rear view of the rear part of the vehicle.
FIG. 3 is an exploded perspective view of the tail light device for a motorcycle.
FIG. 4 is a perspective view of the tail light device for a motorcycle.
FIG. 5 is a front view of a lamp case in the tail light device for a motorcycle.
FIG. 6 is a perspective view of a clear lens in the tail light device for a motorcycle.
FIG. 7 is a perspective view of a red lens in the tail light device for a motorcycle.
FIG. 8 is a cross-sectional view taken along line VIII-VIII in FIG. 2.
FIG. 9 is a cross-sectional view taken along line IX-IX in FIG. 11 and shows a coupling part (range A) between the clear lens and a tail light unit and the periphery thereof in the tail light device for a motorcycle.
FIG. 10 is a cross-sectional view taken along line X-X in FIG. 11 and shows a coupling part (range B) between the clear lens and the tail light unit and the periphery thereof in the tail light device for a motorcycle.
FIG. 11 is a front view of the tail light device for a motorcycle.

### DETAILED DESCRIPTION

An embodiment of the present invention will be specifically explained with reference to drawings.

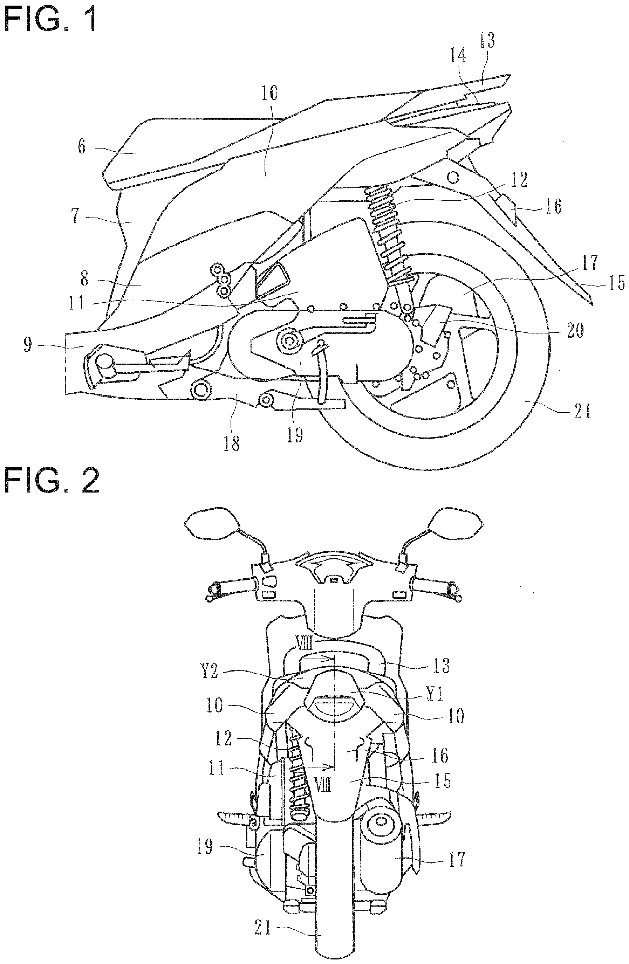

As shown in FIGS. 1 and 2, a tail light device for a motorcycle according to the present modification is composed of electric components attached to a rear part of a motorcycle, and the motorcycle to which the tail light device is applied includes, as components, a seat 6 on which a rider can be seated, a center cover 7, a low side cover 8, a leg shield 9, a side cover 10, an air cleaner 11, a rear cushion 12, a rear grip 13, a rear cover 14, a rear fender 15, a license plate 16, a muffler 17, a main stand 18, a belt converter cover 19, a rear brake caliper 20 and a rear wheel 21.

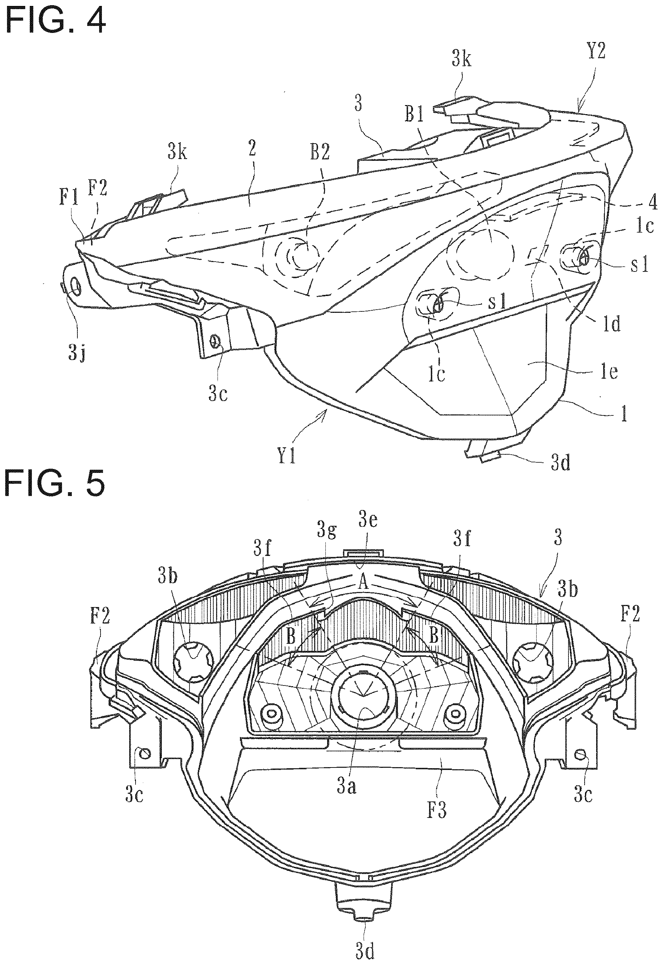

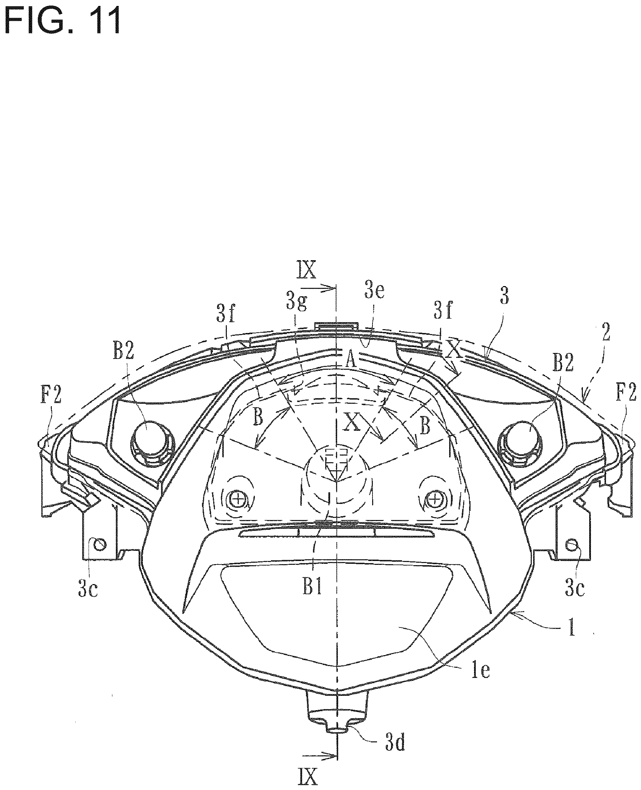

The tail light device for a motorcycle according to the present embodiment is attached to a position above the license plate 16 on the rear fender 15, and as shown in FIGS. 4 and 11, is formed by integrally assembling a tail light unit Y1, a winker unit Y2 and a lamp case 3. The tail light unit Y1 is disposed on the rear part of the vehicle and includes a red lens 1 and a tail light bulb B 1. The winker unit Y2 is disposed on a right upper part and a left upper part of the tail light unit Y1, and includes a clear lens 2 and right and left winker bulbs B2. The lamp case 3 is a component to which the tail light unit Y1 and the winker unit Y2 are attached.

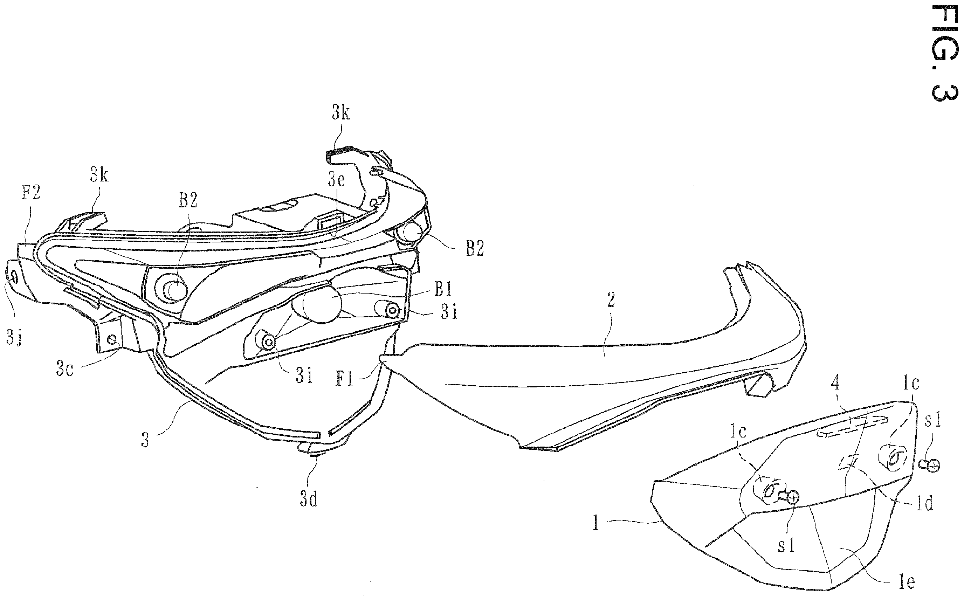

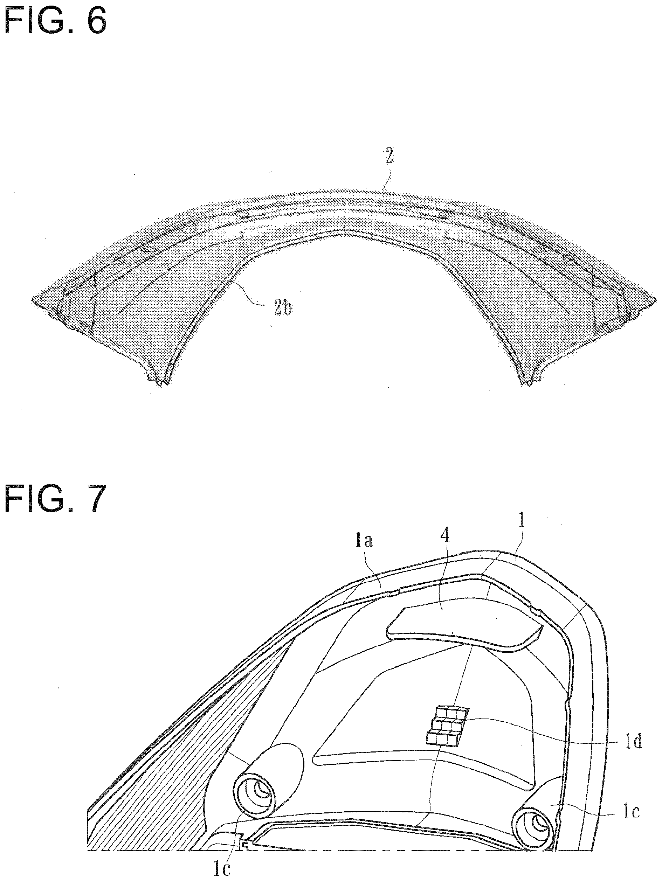

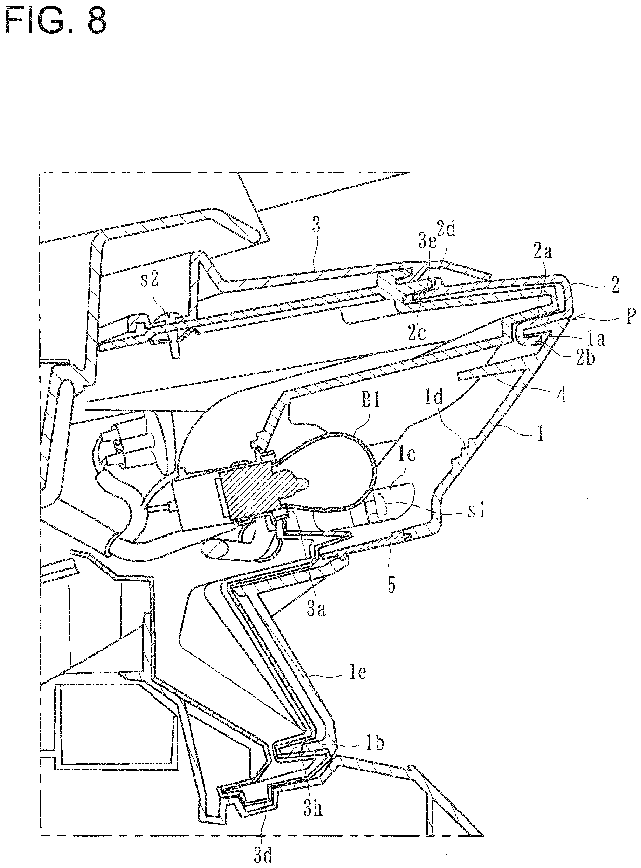

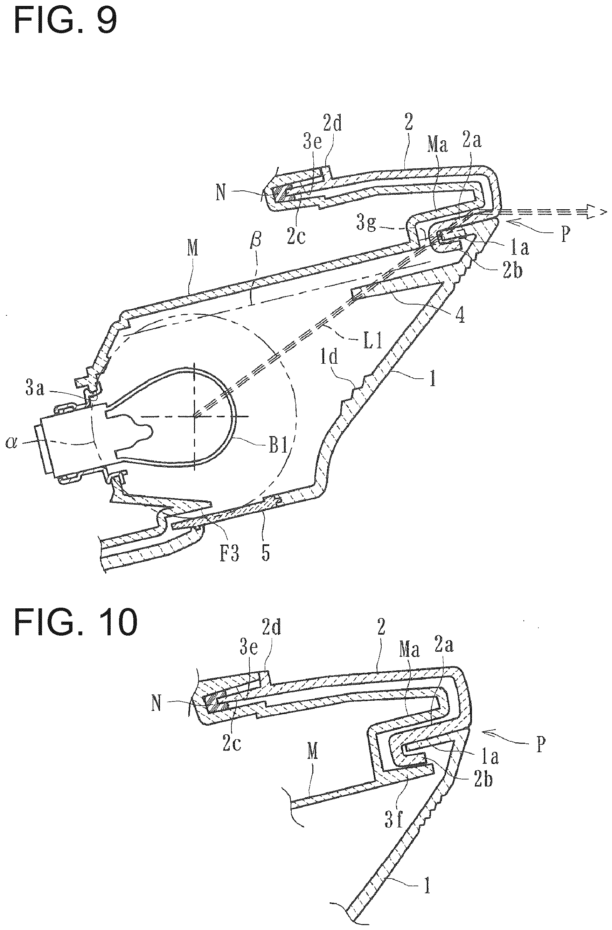

The red lens 1 in the tail light unit Y1 is made of resin molding colored in red and enables penetration of light (white light) from the tail light bulb B 1. The red lens 1 is designed to be assembled to the clear lens 2 (to be described) and the lamp case 3 by inserting an upper end 1a thereof (see FIG. 7) into a hook part 2b (see FIGS. 8 and 9) of the clear lens 2 and by inserting a lower end 1b thereof into an attachment groove 3h of the lamp case 3. Additionally, as shown in FIG. 3, the red lens 1 includes screw insertion parts 1c, and is fixed to the lamp case 3 by screwing screws s1 into screw holes 3i formed in the lamp case 3 through the screw insertion parts 1c.

When the tail light bulb B1 is then lit up, white light is irradiated therefrom. The white light penetrates through the red lens 1 and is changed into red light. Then, the red light is irradiated to the outside. Additionally, as shown in FIGS. 8 and 9, the red lens 1 includes a window part 5 with transparency in a lower part thereof so as to make the license plate 16 of the vehicle face the window part 5. Part of the light irradiated from the tail light bulb B1 is configured to be capable of illuminating the license plate 16 after penetrating through the window part 5.

Moreover, the red lens 1 includes a reflection part 1e capable of reflecting external light in the lower part thereof. The red lens 1 also includes a step part 1d capable of diffusely reflecting the light from the tail light bulb B1. It should be noted that with the construction, the external light can be reflected by the reflection part 1e without blocking penetration of the light from the tail light bulb B1, and simultaneously, diffuse reflection by the step part 1d can enhance aesthetic appearance in transmitting the light from the tail light bulb B1 to the outside.

The clear lens 2 in the winker unit Y2 is made of resin molding with transparency or translucency and enables penetration of light from the right and left winker bulbs B2. As shown in FIG. 3, the clear lens 2 includes pin-shaped joint parts F1 on the both sides thereof. As shown in FIG. 4, by fitting the joint parts F1 to groove parts F2 formed on the lamp case 3, the clear lens can be assembled to the lamp case while in place.

The lamp case 3 is a component to which the tail light unit Y1 and the winker unit Y2 are attached. As shown in FIG. 5, the lamp case 3 includes, as components, an attachment hole 3a, attachment holes 3b, screw holes 3c and 3j, an attachment part 3d, the attachment groove 3h and attachment parts 3k. The attachment hole 3a is a hole to which the tail light bulb B1 can be attached while being inserted therethrough. The attachment holes 3b are holes to which the right and left winker bulbs B2 can be attached while being inserted therethrough. The screw holes 3c and 3j are holes through which screws for fixing the lamp case 3 to the rear fender 15 of the vehicle can be inserted. The attachment part 3d is a part by which a lower part of the lamp case 3 can be fixed to the rear fender 15 of the vehicle. The attachment groove 3h is a groove into which the lower end 1b of the red lens 1 can be inserted. The attachment parts 3k are parts to which the side cover 10 of the vehicle can be attached.

Moreover, the lamp case 3 includes a protruding part F3 that extends to the vicinity of the edge of the window part 5 formed in the lower part of the red lens 1. With the construction, it is possible to prevent leakage of the light from the tail light bulb B1 at an unwanted position in the lower part of the lamp case 3, and also, reliably irradiate the light on the license plate 16. It should be noted that the rear cover 14 of the vehicle is configured to be assembled to an upper part of the lamp case 3 by screws s2.

In the present embodiment, as shown in FIGS. 8 to 10, a coupling part P is herein provided to couple a lower part of the clear lens 2 and an upper part of the tail light unit Y1 (specifically, an upper part of the red lens 1), and the clear lens 2 includes an inwardly inserted part 2a to be inserted to the inside of the red lens 1 in the coupling part P. It should be noted that FIG. 9 shows a cross-sectional view taken along a middle position of the tail light device for a motorcycle (an intermediate position between the right and left winker bulbs B2) (a cross-sectional view within a range A), whereas FIG. 10 shows a cross-sectional view taken along another position (a cross-sectional view within a range B).

Additionally, the red lens 1 according to the present embodiment includes a light shade part 4 that blocks incidence of a direct light L1 (see FIG. 9) from the tail light bulb B1 into the inwardly inserted part 2a. The light shade part 4 is a part integrally molded with the red lens 1 and is colored in the same color (i.e., red) as the red lens 1. The light shade part 4 is made in the form of a rib protruded from the inner peripheral surface of the red lens 1 toward a position above the tail light bulb B 1.

Especially, the inwardly inserted part 2a of the clear lens 2 according to the present embodiment is formed in the upper half (a part across the range A and the ranges B in FIG. 11) of the tail light unit Y1. The inwardly inserted part 2a, other than the range A shaded by the light shade part 4 (i.e., the ranges B), is designed to be shaded against the direct light L1 from the tail light bulb B1 by a reflector wall 3f (see FIGS. 5 and 10) formed in the lamp case 3. On the other hand, the reflector wall 3f includes a cutout 3g (see FIGS. 5 and 9) in the range A shaded by the light shade part 4 (a range located in the middle of the tail light device for a motorcycle), and the inwardly inserted part 2a located in the middle of the right and left winker bulbs B2 is disposed in the cutout 3g.

In other words, when an upper part M of the accommodation space of the tail light bulb B1 in the lamp case 3 is set in a position β shown in FIG. 9, it is possible to prevent incidence of the direct light L1 from the tail light bulb B1 into the inwardly inserted part 2a of the clear lens 2. However, in this construction, the upper part M is inevitably included in a range α set in the surroundings of the tail light bulb B1 (a range in which part of the lamp case 3 cannot be disposed in consideration of heat endurance). Hence, this construction cannot be employed.

In view of the above, when set in an upward position shown in FIG. 9, the upper part M of the lamp case 3 is located outside the range α, but incidence of the direct light L1 from the tail light bulb B1 into the inwardly inserted part 2a of the clear lens 2 is inevitable. It should be noted that when the clear lens 2 is set in a more upward position, it is possible to avoid incidence of the direct light L1 from the tail light bulb B1 into the inwardly inserted part 2a of the clear lens 2. In this construction, however, the entirety of the tail light device for a motorcycle is inevitably enlarged, and this results in necessity of design change of the tail light device. In view of the above, the light shade part 4 is provided in the present invention, whereby incidence of the direct light from the tail light bulb B1 into the inwardly inserted part 2a is configured to be shaded.

Moreover, the clear lens 2 according to the present embodiment includes the hook part 2b (see FIG. 6) formed by bending the lower end of the inwardly inserted part 2a to back of the vehicle (rightward in FIGS. 8 to 10), and the upper end 1a of the upper part of the red lens 1 is designed to be coupled to and held by the hook part 2b. Part of the inwardly inserted part 2a of the clear lens 2, on which the hook part 2b is formed, is designed to be located between a rear end Ma of the lamp case 3 and the upper end 1a of the red lens 1.

Furthermore, the lamp case 3 according to the present embodiment includes a recess 3e on the upper part thereof so as to be capable of holding the clear lens 2 while a protruding part 2c, formed on the middle of the upper end of the clear lens 2, is contacted in abutment to the recess 3e. The recess 3e is filled with a seal member N, and is designed to be capable of being sealed by abutment contact of the protruding part 2c of the clear lens 2 to the recess 3e. It should be noted that the protruding part 2c of the clear lens 2 includes a projection 2d in a predetermined position. When the protruding part 2c is contacted in abutment to the recess 3e, the projection 2d is designed to make contact with the opening edge of the recess 3e whereby further insertion of the protruding part 2c can be restricted.

Then, in assemblage of the tail light device for a motorcycle according to the present embodiment, as shown in FIGS. 3 and 4, the joint parts F1 of the clear lens 2 are fitted to the groove parts F2 of the lamp case 3, whereby the clear lens 2 is assembled to the lamp case 3 while in place. Simultaneously, the protruding part 2c of the clear lens 2 is contacted in abutment to the recess 3e of the lamp case 3, whereby the clear lens 2 is held by the lamp case 3. Subsequently, the red lens 1 is brought closer to the lamp case 3, and the upper end 1a thereof is held by the hook part 2b of the clear lens 2, while the lower end 1b thereof is inserted into the attachment groove 3h of the lamp case 3. Thereafter, the red lens 1 is fixed to the lamp case 3 by the screws s1. In this way, the tail light unit Y1 and the winker unit Y2 are attached to the lamp case 3, and thereafter, the assemblage is fixed to the rear part of the vehicle.

According to the aforementioned embodiment, the clear lens 2 for the right and left winkers is coupled to the upper part of the tail light unit Y1. Hence, it is possible to provide a characteristic design. Additionally, the clear lens 2 is inwardly inserted in the coupling part P that the clear lens 2 and the red lens 1 are joined in the up-and-down direction. Hence, good appearance is obtained in a rear view. In other words, when the red lens 1 is inserted inside, the inward insertion of the red lens 1 is visible through the clear lens 2 disposed above, and this deteriorates appearance. By contrast, when the clear lens 2 is designed to be inserted inside as with the present invention, appearance can be made good.

Moreover, the red lens 1 includes the light shade part 4, and light, penetrating through the light shade part 4 before incidence into the clear lens 2, changes white light from the tail light bulb B1 into red light. Hence, even in the construction that the clear lens 2 is inserted inside, the light entering the clear lens 2 from the tail light bulb B1 does not appear like white leaked light. Therefore, recognition of leaked light can be prevented by changing a ray of light to be incident into the clear lens 2 disposed in a position visible in outer appearance into a ray of light with a desired color before incidence into the clear lens 2.

Additionally, the inwardly inserted part 2a of the clear lens 2 is formed in the upper half of the tail light unit Y1, and the inwardly inserted part 2a, other than the range A shaded by the light shade part 4, is shaded by the reflector wall 3f against the direct light L1 from the tail light bulb B 1. Hence, the light shade part 4 can be set to have a minimally required width dimension. Moreover, the reflector wall 3f includes the cutout 3g in the range A shaded by the light shade part 4. Hence, the height dimension of the tail light device for a motorcycle can be reduced in comparison with when the reflector wall 3f is provided even in the range A shaded by the light shade part 4.

In particular, the light shade part 4 according to the present embodiment is made in the form of the rib protruding from the inner peripheral surface of the red lens 1 toward the position above the tail light bulb B1. Hence, with a possibly simplest construction, the color of a ray of light can be changed into a desired color, and recognition of leaked light can be prevented. It should be noted that the light shade part 4 according to the present embodiment is made in the form of a rib integrally molded with the red lens 1. Alternatively, a light shade part, provided separately from the red lens 1, may be fixed to the inner peripheral surface of the red lens 1 by adhesion or so forth.

Moreover, the clear lens 2 according to the present embodiment includes the hook part 2b formed by bending the lower end of the inwardly inserted part 2a to back of the vehicle, and the upper part of the red lens 1 is coupled to and held by the hook part 2b. Hence, the clear lens 2 and the red lens 1 can be more reliably and easily coupled to each other. In addition, the lamp case 3 includes the recess 3e on the upper part thereof so as to be capable of holding the clear lens 2 while the protruding part 2c, formed on the middle of the upper end of the clear lens 2, is contacted in abutment to the recess 3e. Hence, a cooperative holding force can be produced by holding of the upper part of the red lens 1 by the hook part 2b of the clear lens 2 and abutment contact of the protruding part 2c of the clear lens 2 to the recess 3e of the lamp case 3, and the clear lens 2 can be held easily and reliably.

Furthermore, the pin-shaped joint parts F1 are formed on the both sides of the clear lens 2, and are fitted to the groove parts F2 formed on the lamp case 3, whereby the clear lens 2 can be assembled to the lamp case 3 while in place. Hence, the clear lens 2 can be easily assembled to the lamp case 3 without using any fastening member such as a screw.

The present embodiment has been explained above. However, the present invention is not limited to this. For example, the color of the light shade part 4 may not be red, and instead, may be another desired color whereby recognition of leaked light is prevented, as long as it blocks incidence of the direct light L1 from the tail light bulb B1 into the inwardly inserted part 2a. Additionally, the tail light unit Y1 and the winker unit Y2 may be attached to the lamp case 3 with another structure as long as the clear lens 2 includes the inwardly inserted part 2a to be inserted inside the red lens 1 in the coupling part P. Moreover, the red lens 1 and the clear lens 2 may be made in other shapes, and the red lens 1 may not include the step part 1d and the reflection part 1e.

### INDUSTRIAL APPLICABILITY

The present invention is similarly applicable to tail light devices for a motorcycle, even if they have different shapes in outer appearance or are provided with additional other functions, as long as they include a coupling part coupling a lower part of a clear lens and an upper part of a tail light unit; the clear lens includes an inwardly inserted part to be inserted inside a red lens in the coupling part; and the red lens includes a light shade part shading incidence of direct light from a tail light bulb into the inwardly inserted part.

### Reference Signs List

- 1: Red lens
- 1d: Step part
- 1e: Reflection part
- 2: Clear lens
- 2a: Inwardly inserted part
- 2b: Hook part
- 3: Lamp case
- 4: Shade part
- 5: Window part
- P: Coupling part
- Y1: Tail light unit
- Y2: Winker unit
- B1: Tail light bulb
- B2: Winker bulb

## Claims

1. A tail light device for a motorcycle comprising:
a tail light unit provided on a rear part of a vehicle, the tail light unit including a red lens and a tail light bulb;
a winker unit provided on a right upper part and a left upper part of the tail light unit, the winker unit including a clear lens and right and left winker bulbs; and
a coupling part coupling a lower part of the clear lens and an upper part of the tail light unit;
wherein the clear lens includes an inwardly inserted part inserted inside the red lens in the coupling part, and the red lens includes a light shade part shading incidence of a direct light from the tail light bulb into the inwardly inserted part.

2. The tail light device for a motorcycle according to claim 1, wherein the inwardly inserted part of the clear lens is formed in an upper half of the tail light unit, the inwardly inserted part other than a range shaded by the light shade part being shaded by a reflector wall against the direct light from the tail light bulb.

3. The tail light device for a motorcycle according to claim 2, wherein the reflector wall includes a cutout in the range shaded by the light shade part.

4. The tail light device for a motorcycle according to claim 1, wherein the light shade part is made in a form of a rib protruding from an inner peripheral surface of the red lens toward a position above the tail light bulb.

5. The tail light device for a motorcycle according to claim 1, wherein the clear lens includes a hook part formed by bending a lower end of the inwardly inserted part to back of the vehicle, and an upper part of the red lens is coupled to and held by the hook part.

6. The tail light device for a motorcycle according to claim 5, further comprising:
a lamp case to which the tail light unit and the winker unit are attached, wherein the lamp case includes a recess on an upper part thereof so as to be capable of holding the clear lens while a protruding part formed on a middle of an upper end of the clear lens is contacted in abutment to the recess.

7. The tail light device for a motorcycle according to claim 6, wherein the clear lens includes joint parts having a pin shape on both sides thereof, the joint parts being fitted to groove parts formed on the lamp case whereby the clear lens is capable of being assembled to the lamp case while in place.

8. The tail light device for a motorcycle according to claim 6, wherein the red lens includes a window part with transparency in a lower part thereof so as to make a license plate of the vehicle face the window part, and the lamp case includes a protruding part extended to a vicinity of an edge of the window part.

9. The tail light device for a motorcycle according to claim 1, wherein the red lens includes a reflection part and a step part, the reflection part being capable of reflecting an external light in a lower part thereof, the step part being capable of diffusely reflecting the light from the tail light bulb.

## Amended claims

### Amended claims under Art. 19.1 PCT

**1.** (Amended) A tail light device for a motorcycle comprising:
a tail light unit provided on a rear part of a vehicle, the tail light unit including a red lens and a tail light bulb;
a winker unit provided on a right upper part and a left upper part of the tail light unit, the winker unit including a clear lens and right and left winker bulbs; and
a coupling part coupling a lower part of the clear lens and an upper part of the tail light unit;
wherein the clear lens includes an inwardly inserted part inserted inside the red lens in the coupling part, and the red lens includes a light shade part shading incidence of a direct light from the tail light bulb into the inwardly inserted part, and
the inwardly inserted part of the clear lens is formed in an upper half of the tail light unit, the inwardly inserted part other than a range shaded by the light shade part being shaded by a reflector wall against the direct light from the tail light bulb.

**2.** (Canceled)

**3.** The tail light device for a motorcycle according to claim 2, wherein the reflector wall includes a cutout in the range shaded by the light shade part.

**4.** The tail light device for a motorcycle according to claim 1, wherein the light shade part is made in a form of a rib protruding from an inner peripheral surface of the red lens toward a position above the tail light bulb.

**5.** The tail light device for a motorcycle according to claim 1, wherein the clear lens includes a hook part formed by bending a lower end of the inwardly inserted part to back of the vehicle, and an upper part of the red lens is coupled to and held by the hook part.

**6.** The tail light device for a motorcycle according to claim 5, further comprising:
a lamp case to which the tail light unit and the winker unit are attached, wherein the lamp case includes a recess on an upper part thereof so as to be capable of holding the clear lens while a protruding part formed on a middle of an upper end of the clear lens is contacted in abutment to the recess.

**7.** The tail light device for a motorcycle according to claim 6, wherein the clear lens includes joint parts having a pin shape on both sides thereof, the joint parts being fitted to groove parts formed on the lamp case whereby the clear lens is capable of being assembled to the lamp case while in place.

**8.** The tail light device for a motorcycle according to claim 6, wherein the red lens includes a window part with transparency in a lower part thereof so as to make a license plate of the vehicle face the window part, and the lamp case includes a protruding part extended to a vicinity of an edge of the window part.

**9.** The tail light device for a motorcycle according to claim 1, wherein the red lens includes a reflection part and a step part, the reflection part being capable of reflecting an external light in a lower part thereof, the step part being capable of diffusely reflecting the light from the tail light bulb.

Statement under Art. 19.1 PCT
The written opinion of International Search Authority describes that "The invention of claim 2 is inventive over References 1 to 4 cited by International Search Report". In view of the written opinion, claim 1 is amended to incorporate the subject matter "the inwardly inserted part of the clear lens is formed in an upper half of the tail light unit, the inwardly inserted part other than a range shaded by the light shade part being shaded by a reflector wall against the direct light from the tail light bulb" recited in claim 2 under Article 19.

Accordingly, the invention of amended claim 1 is inventive over cited References 1 to 4.
